# EUROPEAN PATENT APPLICATION

(11) **EP 4 793 115 A1**
(43) Date of publication of application: **19.08.2026**
(21) Application number: 24878685.7
(22) Date of filing: 22.08.2024
(51) Int. Cl.: B60T 8/172, B60T 8/171, B60T 8/32

(54) **VEHICLE BRAKING METHOD, BRAKING CONTROLLER, STORAGE MEDIUM, AND VEHICLE**

(30) Priority: 17.10.2023 CN 202311351004
(71) Applicant: BYD Company Limited, Shenzhen, Guangdong 518118 (CN)
(72) Inventor: YANG, Dongsheng, Shenzhen, Guangdong 518118 (CN); LU, Guoxiang, Shenzhen, Guangdong 518118 (CN); FU, Meng, Shenzhen, Guangdong 518118 (CN); ZHUANG, Xuli, Shenzhen, Guangdong 518118 (CN); GUO, Kai, Shenzhen, Guangdong 518118 (CN)
(74) Representative: Taor, Simon Edward William
(86) International application number: PCT/CN2024/114058
(87) International publication number: WO 2025/082034

(57) **Abstract**

A vehicle braking method, a braking controller, a storage medium, and a vehicle. The method includes: acquiring braking data of a vehicle, the braking data including braking strength data and a braking torque parameter, the braking strength data including an actual deceleration and a target deceleration, and the braking torque parameter including travel resistance (S101); determining pre-control braking torque on the basis of the travel resistance and the target deceleration (S102); then when the braking strength data meets a torque correction condition, obtaining target braking torque on the basis of the actual deceleration, the target deceleration, and the pre-control braking torque (S103); and finally, performing braking control on the vehicle on the basis of the target braking torque (S104). The braking method can improve the braking effect.

## Description

### CROSS-REFERENCE TO RELATED APPLICATIONS

The present disclosure claims priority to Chinese Patent Application No. 202311351004X filed on October 17, 2023, entitled "VEHICLE BRAKING METHOD, BRAKING CONTROLLER, STORAGE MEDIUM, AND VEHICLE", which is incorporated herein by reference in its entirety.

### FIELD

The present disclosure relates to the technical field of vehicle control, in particular to a vehicle braking method, a braking controller, a storage medium and a vehicle.

### BACKGROUND

In the related art, the braking torque is obtained by the brake pedal depth, the friction coefficient of the friction disc changes due to the continuous work of the friction disc, the total mass of the vehicle changes significantly depending on the different passengers or cargos, the braking performance of the vehicle changes, and obtaining the braking torque solely through the brake pedal depth can result in poor braking performance.

### SUMMARY

The purpose of the present disclosure is to provide a vehicle braking method, a braking controller, a storage medium and a vehicle, when the braking strength data satisfies a torque correction condition, a pre-control braking torque is corrected by an actual deceleration and a target deceleration to obtain a target braking torque, thereby improving the braking effect.

According to a first aspect of an embodiment of the present disclosure, a vehicle braking method is provided, including:
braking data of a vehicle being acquired, the braking data including braking strength data and a braking torque parameter, the braking strength data including an actual deceleration and a target deceleration, the braking torque parameter including driving resistance;
a pre-control braking torque being determined according to the driving resistance and the target deceleration;
when the braking strength data satisfies a torque correction condition, a target braking torque being obtained according to the actual deceleration, the target deceleration and the pre-control braking torque;
braking control being performed on the vehicle according to the target braking torque.

In an embodiment, when the braking strength data satisfies the torque correction condition, the target braking torque is obtained according to the actual deceleration, the target deceleration and the pre-control braking torque, including:
when the braking strength data satisfies the torque correction condition, a correction torque being determined according to the actual deceleration and the target deceleration;
the target braking torque being obtained according to the correction torque and the pre-control braking torque.

In an embodiment, the braking strength data further includes an actual braking torque.

When the braking strength data satisfies the torque correction condition, the correction torque is determined according to the actual deceleration and the target deceleration, including:
when the actual deceleration is greater than a first preset deceleration threshold and/or the actual braking torque is greater than a first preset braking torque threshold, the correction torque being determined according to the actual deceleration and the target deceleration.

In an embodiment, the braking strength data further includes a historical braking torque, and the historical braking torque is the target braking torque obtained in a previous braking phase.

When the braking strength data satisfies the torque correction condition, the correction torque is determined according to the actual deceleration and the target deceleration, including:
when the target deceleration is greater than a second preset deceleration threshold and/or the historical braking torque is greater than a second preset braking torque threshold, the correction torque being determined according to the actual deceleration and the target deceleration.

In an embodiment, the braking strength data further includes the actual braking torque, the historical braking torque and a vehicle speed, and the historical braking torque is the target braking torque obtained in a previous braking phase.

When the braking strength data satisfies the torque correction condition, the correction torque is determined according to the actual deceleration and the target deceleration, including:
when the actual deceleration is greater than the first preset deceleration threshold, and/or the actual braking torque is greater than the first preset braking torque threshold, and/or the target deceleration is greater than the second preset deceleration threshold, and/or the historical braking torque is greater than the second preset braking torque threshold, and/or the vehicle speed is greater than a preset vehicle speed threshold, the correction torque being determined according to the actual deceleration and the target deceleration.

In an embodiment, before the braking data of the vehicle is acquired, the method further includes:
driving parameters of the vehicle being acquired, the driving parameters including a brake pedal depth, a total mass of the vehicle, a driving slope and an inherent parameter of the vehicle;
the target deceleration being determined according to the brake pedal depth;
the driving resistance being determined according to the total mass of the vehicle, the driving slope, the vehicle speed and the inherent parameter of the vehicle.

In an embodiment, the target deceleration is determined according to the brake pedal depth, including:
a target brake pedal depth interval in which the brake pedal depth in the driving parameters is located being determined;
the target deceleration corresponding to the target brake pedal depth interval being determined according to the target brake pedal depth interval and a preset correspondence relationship, the correspondence relationship being a correspondence relationship between a plurality of preset brake pedal depth intervals and a plurality of preset decelerations.

In an embodiment, braking control being performed on the vehicle according to the target braking torque includes:
a plurality of control torques corresponding to a plurality of control moments being determined according to a preset torque change rate, the actual braking torque and the target braking torque, a torque change rate between the plurality of control torques being less than or equal to the preset torque change rate, and each of the control torques being within a preset control torque interval;
at each of the control moments, braking control being performed on the vehicle according to the control torque corresponding to the control moment.

According to a second aspect of an embodiment of the present disclosure, a braking controller is provided, including:
a memory having a computer program stored thereon;
a processor configured to execute the computer program in the memory to implement the steps of the vehicle braking method according to the first aspect of the present disclosure.

According to a third aspect of an embodiment of the present disclosure, a non-transitory computer readable storage medium is provided, storing a computer program which, when executed by a processor, implements the steps of the vehicle braking method according to the first aspect of the present disclosure.

According to a fourth aspect of an embodiment of the present disclosure, a vehicle is provided, including the braking controller according to the second aspect of the present disclosure.

According to the technical solution, the pre-control braking torque is obtained according to the driving resistance and the target deceleration, the braking strength is determined according to the braking strength data, if the braking strength data satisfies the torque correction condition, it is determined that the braking strength is large, and the braking target is difficult to be achieved only by the pre-control braking torque, and then the pre-control braking torque is corrected according to the actual deceleration and the target deceleration to obtain the target braking torque, feedback braking is achieved, and the braking effect is improved.

Other features and advantages of the present disclosure will be apparent in the following detailed description.

### BRIEF DESCRIPTION OF THE DRAWINGS

The accompanying drawings are intended to provide a further understanding of the present disclosure and constitute a part of the specification and, together with the following detailed description, serve to explain the present disclosure, but are not intended to limit the present disclosure. In the drawings:
FIG. 1 is a flow chart illustrating a vehicle braking method according to an exemplary embodiment.
FIG. 2 is a flow chart illustrating a method for determining a target deceleration and a driving resistance according to an exemplary embodiment.
FIG. 3 is a flow chart illustrating a method for determining a target deceleration according to an exemplary embodiment.
FIG. 4 is a flow chart illustrating another vehicle braking method according to an exemplary embodiment.
FIG. 5 is a block diagram illustrating a braking controller according to an exemplary embodiment.

### DETAILED DESCRIPTION

The specific embodiments of the present disclosure will be described in detail with reference to the accompanying drawings. It should be understood that the detailed description described herein is for illustration and explanation of the present disclosure only, and is not intended to limit the present disclosure.

In the related art, a braking control method is to calculate a brake pedal depth, convert the brake pedal depth into a braking torque, and then generate a corresponding friction force by a braking mechanism to generate friction with the ground, thereby achieving a corresponding braking deceleration. In this process, the braking deceleration generated by the calculated braking torque cannot reach the target due to the change of the friction coefficient caused by the continuous work of the friction disc and the significant change of the total mass of the vehicle depending on the different passengers or cargos, thereby affecting the braking performance of the vehicle. Therefore, the strategy of determining the braking torque by only calculating the brake pedal depth cannot satisfy the increasing requirements for the braking control accuracy of the vehicle.

In view of the technical problem, the embodiments of the present disclosure provide a vehicle braking method, a braking controller, a storage medium and a vehicle. The pre-control braking torque is obtained according to the driving resistance and the target deceleration, the braking strength is determined according to the braking strength data, if the braking strength data satisfies the torque correction condition, it is determined that the braking strength is large, and the braking target is difficult to be achieved only by the pre-control braking torque, and then the pre-control braking torque is corrected according to the actual deceleration and the target deceleration to obtain the target braking torque, feedback braking is achieved, and the braking effect is improved.

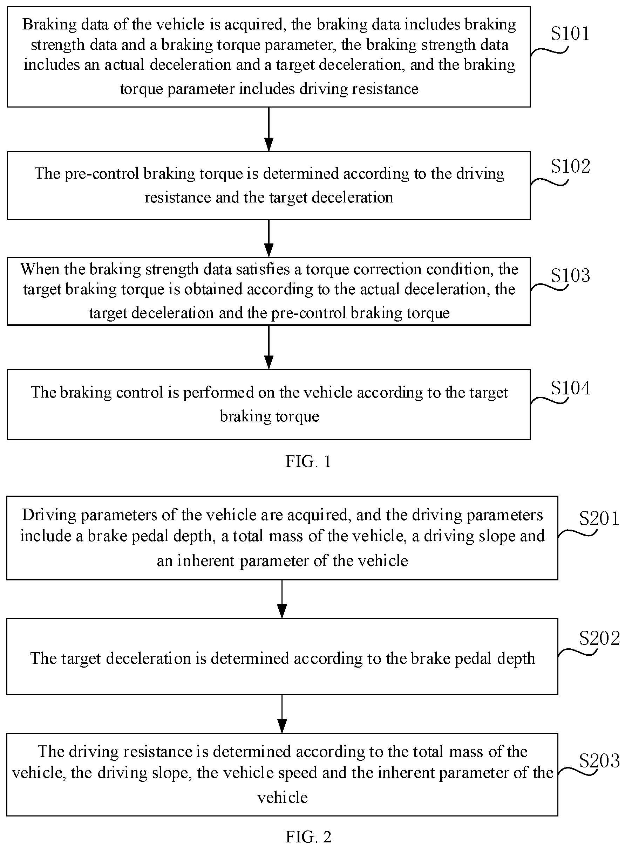

FIG. 1 is a flow chart illustrating a vehicle braking method according to an exemplary embodiment. As shown in FIG. 1, the method can be applied to a braking controller, and the method can include the following steps.

In step S101, braking data of the vehicle is acquired, the braking data includes braking strength data and a braking torque parameter, the braking strength data includes an actual deceleration and a target deceleration, and the braking torque parameter includes driving resistance.

In the embodiment, the braking data related to the brake of the vehicle can be acquired, and the braking data can include braking strength data and braking torque data. The braking strength data is used to characterize the difficulty of reaching the braking target. The greater the braking strength, the greater the influence of the change of the brake disc friction coefficient and the change of the total mass of the vehicle on whether the actual braking can reach the braking target. The braking strength data can include the actual deceleration and the target deceleration, and can also include an actual braking torque, a historical braking torque and a vehicle speed. The actual deceleration, the target deceleration, the actual braking torque, the historical braking torque and the vehicle speed are all positively correlated with the braking strength. That is, the greater the value of the braking strength data is, the greater the braking strength is, and the more difficult it is to reach the braking target. The braking torque parameters can include the driving resistance, and can also include the target deceleration. The pre-control braking torque can be determined according to the braking torque data. The target deceleration is determined according to the brake pedal depth.

In step S102, the pre-control braking torque is determined according to the driving resistance and the target deceleration.

In the embodiment, the wheel braking force can be calculated according to the driving resistance and the target deceleration, and the pre-control braking torque can be obtained according to the wheel braking force and the wheel rolling radius.

In step S103, when the braking strength data satisfies a torque correction condition, the target braking torque is obtained according to the actual deceleration, the target deceleration and the pre-control braking torque.

In the embodiment, when the braking strength data satisfies the torque correction condition, it is determined that the braking strength of the vehicle is large, and the braking target is difficult to be achieved only by the pre-control braking torque, so that the feedback braking can be performed. That is, the pre-control braking torque is feedback adjusted according to the actual deceleration and the target deceleration to obtain the target braking torque.

In a possible embodiment, the method for obtaining the target braking torque according to the actual deceleration, the target deceleration and the pre-control braking torque can be: obtaining a correction torque according to the actual deceleration and the target deceleration, and obtaining the target braking torque according to the correction torque and the pre-control braking torque.

In the embodiment, the correction torque can be obtained by feedback calculation according to the difference between the actual deceleration and the target deceleration, the correction torque can be a positive value, and the pre-control braking torque is corrected by using the correction torque to obtain the target braking torque. That is, the correction torque and the braking torque can be directly added to obtain the target braking torque.

In step S104, the braking control is performed on the vehicle according to the target braking torque.

In the embodiment, the braking control is performed on the vehicle according to the target braking torque based on the current braking torque of the vehicle. Optionally, the current braking torque of the vehicle can be gradually adjusted to the target braking torque in multiple times to improve the braking comfort. The braking mechanism can be directly controlled by the braking controller for braking, or the braking controller can send a control instruction to a lower-level controller to control the braking mechanism for braking.

In the embodiment, the pre-control braking torque is obtained according to the driving resistance and the target deceleration, the braking strength is determined according to the braking strength data, if the braking strength data satisfies the torque correction condition, it is determined that the braking strength is large, and the braking target is difficult to be achieved only by the pre-control braking torque, and then the correction torque is obtained according to the actual deceleration and the target deceleration to correct the pre-control braking torque, feedback braking is achieved, and the braking effect is improved.

In a possible embodiment, when the braking strength data does not satisfy the torque correction condition, the pre-control braking torque is directly determined as the target braking torque, and the braking control is performed on the vehicle according to the target braking torque.

In a possible embodiment, the braking strength data can further include the actual braking torque.

When the braking strength data satisfies the torque correction condition, the correction torque is determined according to the actual deceleration and the target deceleration, including: when the actual deceleration is greater than a first preset deceleration threshold and/or the actual braking torque is greater than a first preset braking torque threshold, the correction torque being determined according to the actual deceleration and the target deceleration.

In the embodiment, the braking strength data can further include the actual braking torque, which can be detected by a torque sensor.

In an embodiment, when the actual deceleration is greater than the first preset deceleration threshold, it can be determined that the braking strength data satisfies the torque correction condition, at this time, the braking strength of the vehicle is relatively large, and then the feedback braking can be performed, and the correction torque is determined according to the actual deceleration and the target deceleration. The first preset deceleration threshold can be set according to the actual situation of the vehicle, and is not specifically limited herein.

In an embodiment, when the actual braking torque is greater than the first preset braking torque threshold, it can be determined that the braking strength data satisfies the torque correction condition, and then the feedback braking can be performed, and the correction torque is determined according to the actual deceleration and the target deceleration. The first preset braking torque threshold can be set according to the actual situation of the vehicle, and is not specifically limited herein.

In an embodiment, when the actual deceleration is greater than the first preset deceleration threshold and the actual braking torque is greater than the first preset braking torque threshold, it can be determined that the braking strength data satisfies the torque correction condition, and then the feedback braking can be performed, and the correction torque is determined according to the actual deceleration and the target deceleration. The first preset deceleration threshold and the first preset braking torque threshold can be set according to the actual situation of the vehicle, and are not specifically limited herein.

In a possible embodiment, the braking strength data further includes a historical braking torque, and the historical braking torque is a target braking torque obtained in a previous braking stage.

When the braking strength data satisfies the torque correction condition, the correction torque is determined according to the actual deceleration and the target deceleration, including: when the target deceleration is greater than a second preset deceleration threshold and/or the historical braking torque is greater than a second preset braking torque threshold, the correction torque being determined according to the actual deceleration and the target deceleration.

In the embodiment, the braking strength data can further include the historical braking torque, and the historical braking torque is a target braking torque obtained in a previous braking stage. If the current braking is the first braking stage, the target braking torque obtained in the previous braking stage can be 0.

In an embodiment, when the target deceleration is greater than the second preset deceleration threshold, it can be determined that the braking strength data satisfies the torque correction condition, and then the feedback braking can be performed, and the correction torque is determined according to the actual deceleration and the target deceleration. The second preset deceleration threshold can be set according to the actual situation of the vehicle, and is not specifically limited herein.

In an embodiment, when the historical braking torque is greater than the second preset braking torque threshold, it can be determined that the braking strength data satisfies the torque correction condition, and then the feedback braking can be performed, and the correction torque is determined according to the actual deceleration and the target deceleration. The second preset braking torque threshold can be set according to the actual situation of the vehicle, and is not specifically limited herein.

In an embodiment, when the target deceleration is greater than the second preset deceleration threshold and the historical braking torque is greater than the second preset braking torque threshold, it can be determined that the braking strength data satisfies the torque correction condition, and then the feedback braking can be performed, and the correction torque is determined according to the actual deceleration and the target deceleration. The second preset deceleration threshold and the second preset braking torque threshold can be set according to the actual situation of the vehicle, and are not specifically limited herein.

In a possible embodiment, the braking strength data further includes the actual braking torque, the historical braking torque and the vehicle speed, and the historical braking torque is the target braking torque obtained in a previous braking stage.

When the braking strength data satisfies the torque correction condition, the correction torque is determined according to the actual deceleration and the target deceleration, including: when the actual deceleration is greater than the first preset deceleration threshold, and/or the actual braking torque is greater than the first preset braking torque threshold, and/or the target deceleration is greater than the second preset deceleration threshold, and/or the historical braking torque is greater than the second preset braking torque threshold, and/or the vehicle speed is greater than the preset vehicle speed threshold, the correction torque is determined according to the actual deceleration and the target deceleration.

In the embodiment, the braking strength data further includes the actual braking torque, the historical braking torque and the vehicle speed, and the actual braking torque, the historical braking torque and the vehicle speed are positively correlated with the braking strength.

In an embodiment, when the actual deceleration is greater than the first preset deceleration threshold, it can be determined that the braking strength of the vehicle is relatively large.

In an embodiment, when the actual braking torque is greater than the first preset braking torque threshold, it can be determined that the braking strength of the vehicle is relatively large.

In an embodiment, when the target deceleration is greater than the second preset deceleration threshold, it can be determined that the braking strength of the vehicle is relatively large.

In an embodiment, when the historical braking torque is greater than the second preset braking torque threshold, it can be determined that the braking strength of the vehicle is relatively large.

In an embodiment, when the vehicle speed is greater than the preset vehicle speed threshold, it can be determined that the braking strength of the vehicle is relatively large.

In an embodiment, the braking strength of the vehicle can be determined to be relatively large when any of the above conditions is satisfied, that is, the braking strength data satisfies the torque correction condition, and then the feedback braking can be performed, and the correction torque is determined according to the actual deceleration and the target deceleration.

In a possible embodiment, before the correction torque is determined according to the actual deceleration and the target deceleration, it is further determined whether the braking execution element is faulty and whether the vehicle is in a parking gear, and when the braking execution element is not faulty and the vehicle is not in the parking gear, the correction torque is determined according to the actual deceleration and the target deceleration.

FIG. 2 is a flow chart illustrating a method for determining a target deceleration and a driving resistance according to an exemplary embodiment. As shown in FIG. 2, in a possible embodiment, before the braking data of the vehicle is acquired, the method further includes the following steps.

In step S201, driving parameters of the vehicle are acquired, and the driving parameters include a brake pedal depth, a total mass of the vehicle, a driving slope and an inherent parameter of the vehicle.

In the embodiment, the brake pedal depth is obtained according to the stroke of the brake pedal stepped on by the user, the total mass of the vehicle includes the sum of the mass of the vehicle itself and the masses of passengers and other articles, the driving slope is the angle between a slope and a horizontal plane, and the inherent parameters of the vehicle are fixed parameters of the vehicle itself, which optionally include a wheel rolling radius, a rolling resistance coefficient, a wind resistance coefficient and a vehicle windward area.

In step S202, the target deceleration is determined according to the brake pedal depth.

In the embodiment, the brake pedal depth and the target deceleration have a preset corresponding relationship, and the target deceleration can be determined based on the preset corresponding relationship between the brake pedal depth and the target deceleration.

In step S203, the driving resistance is determined according to the total mass of the vehicle, the driving slope, the vehicle speed and the inherent parameter of the vehicle.

In the embodiment, the driving resistance of the vehicle can be determined based on a force relationship of the vehicle, and optionally, the driving resistance can include slope resistance, wind resistance and rolling resistance, the rolling resistance can be determined according to the total mass of the vehicle, the rolling resistance coefficient and the driving slope, the wind resistance can be determined according to the wind resistance coefficient, the vehicle windward area and the vehicle speed, and the slope resistance can be determined according to the total mass of the vehicle and the driving slope. The specific calculation formula can be as follows:
${F}_{f} = m \times g \times {f}_{v} \times cos α$
${F}_{w} = \frac{{C}_{D} \times A \times {v}^{2}}{21.15}$
${G}_{h} = m \times g \times sin α$
wherein, F_{w} is the wind resistance, F_{f} is the rolling resistance, g is the gravity, Gₕ is the gravity slope component, that is, the slope resistance, r is the wheel rolling radius, m is the total mass of the vehicle, α is the driving slope, which defines the front of the car facing upward as positive, otherwise it is negative. fᵥ is the rolling resistance coefficient, which is related to the type of road surface, vehicle speed, tire material pressure, etc. C_{D} is the wind resistance coefficient, for example, the wind resistance coefficient of the vehicle can be 0.2-0.6, A is the vehicle windward area, and v is the vehicle speed.

The wheel braking force can be determined according to the driving resistance, the total mass of the vehicle and the target deceleration, and the pre-control braking torque can be determined according to the wheel braking force and the wheel rolling radius.

The calculation formula can be as follows:
${F}_{b} = m \times a - {F}_{w} - {F}_{f} + {G}_{h}$
${T}_{b} = {F}_{b} \times r$
wherein, F_{b} is the wheel braking force, a is the target deceleration, r is the wheel rolling radius, and T_{b} is the pre-control braking torque.

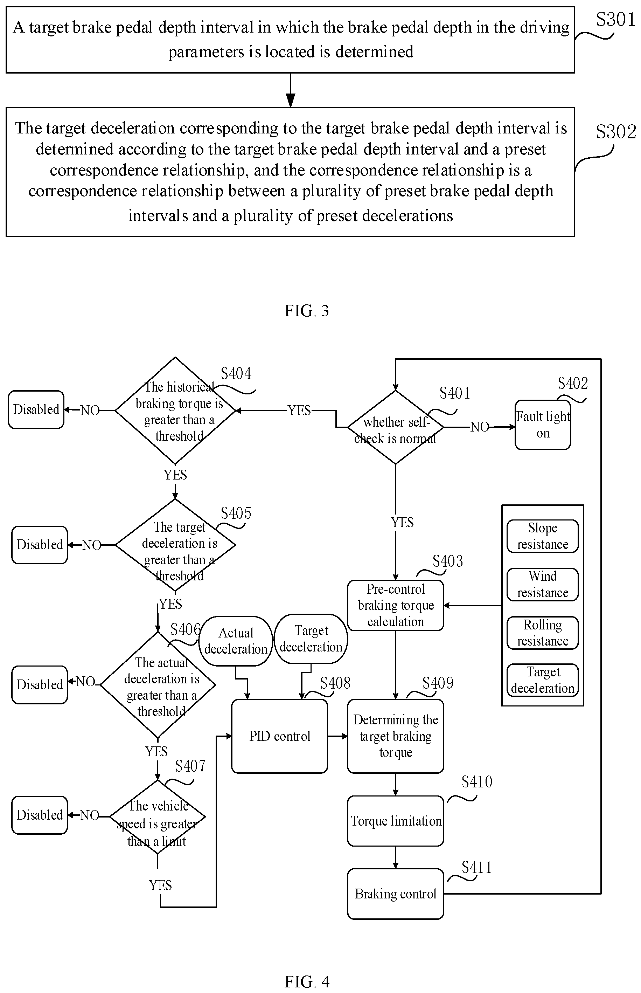

FIG. 3 is a flow chart illustrating a method for determining a target deceleration according to an exemplary embodiment. As shown in FIG. 3, in a possible embodiment, determining the target deceleration according to the brake pedal depth can include the following steps.

In step S301, a target brake pedal depth interval in which the brake pedal depth in the driving parameters is located is determined.

In step S302, the target deceleration corresponding to the target brake pedal depth interval is determined according to the target brake pedal depth interval and a preset correspondence relationship, and the correspondence relationship is a correspondence relationship between a plurality of preset brake pedal depth intervals and a plurality of preset decelerations.

In the embodiment, the preset correspondence relationship can be a correspondence relationship between a plurality of preset brake pedal depth intervals and a plurality of preset decelerations. For example, a target deceleration query table can be set, and the target deceleration query table includes a plurality of preset brake pedal depth intervals and the preset deceleration corresponding to each preset brake pedal depth interval. The target brake pedal depth interval in which the brake pedal depth in the driving parameters is located is determined, and the target deceleration is obtained according to the preset deceleration corresponding to the target brake pedal depth interval.

In a possible embodiment, braking control is performed on the vehicle according to the target braking torque, including: a plurality of control torques corresponding to a plurality of control moments being determined according to the preset torque change rate, the actual braking torque and the target braking torque, the torque change rate between the plurality of control torques being less than or equal to the preset torque change rate, and each control torque being within a preset control torque interval; and at each of the control moments, braking control being performed on the vehicle according to the control torque corresponding to the control moment.

In the embodiment, in order to maintain comfort, the preset torque change rate is preset for controlling the change speed of the braking torque, a value less than or equal to the preset torque change rate can be determined, and the plurality of control torques corresponding to the plurality of control moments are determined based on the actual braking force and the target braking force, that is, one control torque corresponds to each control moment. The preset control torque interval is used for limiting a size of each control torque, and each control torque is within the preset control torque interval. This avoids long braking time caused by too small control torque or poor comfort experience of users caused by too large control torque. At each control moment, the braking control is performed on the vehicle according to the control torque corresponding to the control moment, so that the braking target can be gradually reached, the acceleration change is more reasonable, and the comfort experience of the user is improved.

In a possible embodiment, various indication signals required for braking can be acquired to determine whether a braking fault exists, and the calculation of the target braking torque is performed only when no braking fault exists.

FIG. 4 is a flow chart illustrating another vehicle braking method according to an exemplary embodiment. As shown in FIG. 4, the method includes the following steps.

In step S401, the vehicle is self-checked to determine whether the vehicle is normal. Specifically, it is determined whether the braking function of the vehicle is normal. If the braking function is normal, steps S403 and S404 are performed. If the braking function is not normal, step S402 is performed.

In step S402, a fault light can be controlled to light up.

In step S403, the pre-control braking torque can be determined according to the slope resistance, the wind resistance, the rolling resistance and the target deceleration.

In step S404, it is determined whether the historical braking torque is greater than a threshold, i.e., whether it is greater than the second preset braking torque threshold. If not, it is disabled, i.e., the feedback braking is not performed, and the feedforward braking is directly performed, i.e., the pre-control braking torque is determined as the target braking torque. If yes, step S405 is performed.

In step S405, it is determined whether the target deceleration is greater than a threshold, i.e., whether it is greater than the second preset deceleration threshold. If yes, step S406 is performed. If not, it is disabled.

In step S406, it is determined whether the actual deceleration is greater than a threshold, i.e., whether it is greater than the first preset deceleration threshold. If yes, step S407 is performed. If not, it is disabled.

In step S407, it is determined whether the vehicle speed is greater than a limit, i.e., whether it is greater than the preset vehicle speed threshold. If yes, step S408 is performed. If not, it is disabled.

In step S408, the feedback control is performed according to the actual deceleration and the target deceleration to obtain the correction torque. Step S409 is performed.

In step S409, the target braking torque is determined according to the correction torque and the pre-control braking torque.

In step S410, the torque limitation is performed, i.e., a plurality of control torques corresponding to a plurality of control moments are determined according to the preset torque change rate, the actual braking torque and the target braking torque. The torque change rate between the plurality of control torques is less than or equal to the preset torque change rate, and each control torque is within the preset control torque range.

In step S411, the braking control is performed, i.e., at each control moment, the braking control is performed on the vehicle according to the control torque corresponding to the control moment. Thus, the braking control of the current braking stage is completed, and the process returns to step S401 to perform the braking control of the next braking stage.

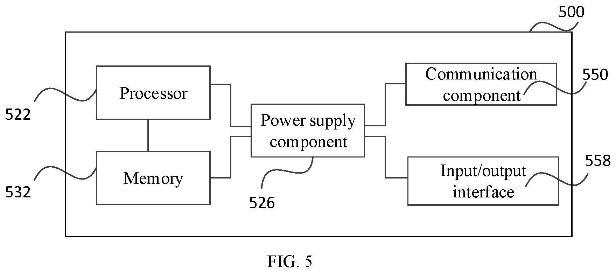

FIG. 5 is a block diagram illustrating a braking controller according to an exemplary embodiment. Referring to FIG. 5, the braking controller 500 includes one or more processors 522 and a memory 532 storing a computer program executable by the processor 522. The computer program stored in the memory 532 can include one or more modules each of which corresponds to a set of instructions. In addition, the processor 522 can be configured to execute the computer program to implement the vehicle braking method described above.

In addition, the braking controller 500 can further include a power supply component 526 and a communication component 550, the power supply component 526 is configured to implement power management of the braking controller 500 and the communication component 550 is configured to implement communication of the braking controller 500, e.g., wired or wireless communication. In addition, the braking controller 500 can further include an input/output interface 558. The braking controller 500 can operate based on an operating system stored in the memory 532.

In another exemplary embodiment, a vehicle is also provided, including the braking controller of the above embodiments.

In another exemplary embodiment, a computer readable storage medium is provided, storing program instructions which, when executed by a processor, implements the steps of the vehicle braking method described above. For example, the non-transitory computer-readable storage medium can be the memory 532 including the program instructions described above, which can be executed by the processor 522 of the braking controller 500 to complete the vehicle braking method described above.

In another exemplary embodiment, a computer program product is also provided, including a computer program which can be executed by a programmable device, and the computer program has code portions for executing the vehicle braking method described above when executed by the programmable device.

The preferred embodiments of the present disclosure are described in detail above with reference to the drawings, but the present disclosure is not limited to the specific details of the above embodiments, and various simple modifications can be made to the technical solutions of the present disclosure within the technical concept of the present disclosure, and these simple modifications all belong to the protection scope of the present disclosure.

In addition, it should be noted that each of the technical features described in the above embodiments can be combined by any appropriate manner without contradiction. In order to avoid unnecessary repetition, the present disclosure will not describe various possible combinations again.

In addition, any combination of the various embodiments of the present disclosure can also be made as long as it does not deviate from the idea of the present disclosure, and it should also be considered as disclosed by the present disclosure.

## Claims

1. A vehicle braking method, comprising:
acquiring braking data of a vehicle, the braking data comprising braking strength data and a braking torque parameter, the braking strength data comprising an actual deceleration and a target deceleration, the braking torque parameter comprising driving resistance (S101);
determining a pre-control braking torque according to the driving resistance and the target deceleration (S102);
when the braking strength data satisfies a torque correction condition, obtaining a target braking torque according to the actual deceleration, the target deceleration and the pre-control braking torque (S103);
performing braking control on the vehicle according to the target braking torque (S104).

2. The vehicle braking method according to claim 1, wherein when the braking strength data satisfies the torque correction condition, obtaining the target braking torque according to the actual deceleration, the target deceleration and the pre-control braking torque comprises:
when the braking strength data satisfies the torque correction condition, determining a correction torque according to the actual deceleration and the target deceleration;
obtaining the target braking torque according to the correction torque and the pre-control braking torque.

3. The vehicle braking method according to claim 2, wherein the braking strength data further comprises an actual braking torque;
when the braking strength data satisfies the torque correction condition, determining the correction torque according to the actual deceleration and the target deceleration comprises:
when the actual deceleration is greater than a first preset deceleration threshold and/or the actual braking torque is greater than a first preset braking torque threshold, determining the correction torque according to the actual deceleration and the target deceleration.

4. The vehicle braking method according to any one of claims 2 and 3, wherein the braking strength data further comprises a historical braking torque, the historical braking torque being the target braking torque obtained in a previous braking phase; when the braking strength data satisfies the torque correction condition, determining the correction torque according to the actual deceleration and the target deceleration comprises:
when the target deceleration is greater than a second preset deceleration threshold and/or the historical braking torque is greater than a second preset braking torque threshold, determining the correction torque according to the actual deceleration and the target deceleration.

5. The vehicle braking method according to any one of claims 2 to 4, wherein the braking strength data further comprises the actual braking torque, the historical braking torque and a vehicle speed, the historical braking torque being the target braking torque obtained in a previous braking phase;
when the braking strength data satisfies the torque correction condition, determining the correction torque according to the actual deceleration and the target deceleration comprises:
when the actual deceleration is greater than the first preset deceleration threshold, and/or the actual braking torque is greater than the first preset braking torque threshold, and/or the target deceleration is greater than the second preset deceleration threshold, and/or the historical braking torque is greater than the second preset braking torque threshold, and/or the vehicle speed is greater than a preset vehicle speed threshold, determining the correction torque according to the actual deceleration and the target deceleration.

6. The vehicle braking method according to any one of claims 1 to 5, wherein before acquiring the braking data of the vehicle, the method further comprises:
acquiring driving parameters of the vehicle, the driving parameters comprising a brake pedal depth, a total mass of the vehicle, a driving slope and an inherent parameter of the vehicle (S201);
determining the target deceleration according to the brake pedal depth (S202);
determining the driving resistance according to the total mass of the vehicle, the driving slope, the vehicle speed and the inherent parameter of the vehicle (S203).

7. The vehicle braking method according to claim 6, wherein determining the target deceleration according to the brake pedal depth comprises:
determining a target brake pedal depth interval in which the brake pedal depth in the driving parameters is located (S301);
determining the target deceleration corresponding to the target brake pedal depth interval according to the target brake pedal depth interval and a preset correspondence relationship, the correspondence relationship being a correspondence relationship between a plurality of preset brake pedal depth intervals and a plurality of preset decelerations (S302).

8. The vehicle braking method according to any one of claims 1 to 5, wherein performing braking control on the vehicle according to the target braking torque comprises:
determining a plurality of control torques corresponding to a plurality of control moments according to a preset torque change rate, the actual braking torque and the target braking torque, a torque change rate between the plurality of control torques being less than or equal to the preset torque change rate, and each of the control torques being within a preset control torque interval;
at each of the control moments, performing braking control on the vehicle according to the control torque corresponding to the control moment.

9. A non-transitory computer readable storage medium, storing a computer program which, when executed by a processor, implements the steps of the vehicle braking method according to any one of claims 1 to 8.

10. A braking controller, comprising:
a memory (532) having a computer program stored thereon;
a processor (522) configured to execute the computer program in the memory (532) to implement the steps of the vehicle braking method according to any one of claims 1 to 8.

11. A vehicle, comprising the braking controller (500) according to claim 10.
